# EUROPEAN PATENT SPECIFICATION

(11) **EP 2 718 415 B1**
(45) Date of publication and mention of the grant of the patent: **19.11.2014**
(21) Application number: 11749569.7
(22) Date of filing: 23.06.2011
(51) Int. Cl.: C12G 3/04, C12G 3/06

(54) **PRODUCTION METHOD OF A STRONG ALCOHOLIC BEVERAGE**
VERFAHREN ZUR HERSTELLUNG EINES STARKEN ALKOHOLISCHEN GETRÄNKES
PROCÉDÉ DE PRODUCTION D'UNE BOISSON ALCOOLISÉE FORTE

(30) Priority: 08.06.2011 LT 2011054
(43) Date of publication of application: 16.04.2014
(73) Proprietor: UAB "Rokiskio Pragiedruliai", 42100 Rokiskis (LT)
(72) Inventor: PONKRATOV, Sergey, Moscow 109559 (RU)
(74) Representative: Petniunaite, Jurga
(86) International application number: PCT/LT2011/000008
(87) International publication number: WO 2012/169868

(56) References cited:
- RU-C1- 2 178 457
- US-A1- 2010 291 282

## Description

### Field of invention

Invention is related to the production of alcoholic beverages and can be used to produce strong vines, vodka and other strong spirits.

### Technical level

Vodka is a strong intoxicating drink made from neutral spirit and water. This is one of the most popular and versatile strong drinks. It is produced from spirits of rectified wheat, cereals, potatoes, molasses or beet and water; has no aging requirements. Rectified spirit is mixed with water and received mixture is filtered through sand, active carbon or ceramic filters. Its quality is defined by the type of used wheat, distillation and purification processes and their quantity, softness of water. For aroma and taste of the drink various additives are used.

In a few patens of Russian Federation, manufacturing methods of vodka are disclosed, where water is treated with an active carbon and the mixture of water and neutral spirit is prepared in an injector. After softening by using active carbon, water is supplied to the vacuum area of the injector and rectified ethyl alcohol "Extra", suspension of active carbon and sugar syrup are supplied to the water stream. Afterwards, the obtained mixture is diverted to the pressure vessel and mixed by using air. Later on, the prepared vodka is filtered and diverted to the settling stills whereat prepared solutions of aromas of spirits and other additives are added. The vodka is remixed in tanks, undergoes final filtration and is supplied for bottling. During the production process of vodka the applied additives of spirit of aromatic hop (RU 2 132 381), solutions of spirit of lemons and rose oil (RU 2 178 457), water together with infusions of spirit of linden and olive (RU 2 178 458) and water together with infusion of spirit of ginseng and seeds of magnolia vine (RU 2 178 460) give rise to variety of vodkas.

There is another known production method of alcoholic beverages, when rectified ethyl alcohol "Extra" is mixed with drinkable water thus obtaining a solution of water and spirit with alcoholic content of 50% by volume. During the mixing, alcoholic content is adjusted. Premade vegetative raw material is infused with the aforementioned solution and left for 3-5 days to settle. Together with raw material, the obtained mixture of infusion is loaded to the distillation apparatus, whereat the mixture is distilled according to known parameters of technical level. Fractions of required content are selected, the ready-made alcohol content is adjusted and amount of aldehydes is lowered by diluting cooled fractions with cold water. Additives are added to the obtained drink and left to settle, thereafter the content of alcohol in the drink is adjusted, the drink is filtered and bottled (RU 2 302 456).

Organoleptic properties of drink produced by this method are unsatisfactory.

### Object of the invention

The object of the invention is the improvements of the organoleptic properties of a ready-made drink i.e. softening and improving the taste of the drink, thus avoiding the irritation of taste receptors.

The present invention describes a method for producing strong alcoholic drinks by using this technology for production of alcoholic drinksin an efficient way, where the content of ethyl alcohol is more than 30% by volume.

The production method of alcoholic drink comprises traditional steps of producing a drink, i.e. preparation of ethyl alcohol and water solution by mixing water with ethyl alcohol, adding of sugar syrup and vegetative additives to the ready-made solution, filtration of the solution and subsequent bottling. The object of this invention is achieved by preparation of sugar syrup from 1/10 part of the prepared solution of ethyl alcohol and water. For 100 ml of solution 1-25 grams of sugar are taken, prepared syrup is poured into the solution of ethyl alcohol and water; vacuum is created in hermetic vessel with prepared solution, where the solution is subjected to stirring with a blade mixer at a frequency of <0,3 rpm, pressure of 10 mmHg and temperature of 20 °C. The end of preparation of the solution (total degasation) is determined according to bubbles disappearance, which is confirmed visually or by using a stethoscope. Afterwards, the hermetic-state liquid is diverted to the bottling.

In case of production of aromatized strong alcoholic drinks, like tequila, liqueur and bitter, after vacuuming, the solution can be saturated with nitrogen by applying gasification.

### Description of the invention

In production of alcoholic drinks, main raw constituents used are: ethyl alcohol, distilled water, air as drinks component, vegetative material and sugar.

Ethyl alcohol (spirit) (C₂H₅OH) is colourless, clear liquid which has a characteristic smell and fiery taste. Neutral spirit is chemically neutral and when used in food industry shows lightly acidic reaction (due to presence of organic acids). Ethyl alcohol boils at normal pressure at 78,3 °C temperature and freezes at -117 °C. Density of alcohol and its solutions depends on the temperature and decreases, when temperature is increased. In production, used relative density shows volume mass unit ratio of alcohol (or its solution) with volume mass unit of water at 20 °C temperature. Relative density of alcohol at the said temperature is 0,79067. At 4 °C temperature, when the density of water has biggest value, proportional density of alcohol is 0,78927.

For production of alcoholic drinks a rectified ethyl alcohol is used (any vegetative origin). Additional purification of said ethyl alcohol has a significant impact, except when alcohol is obtained from agave. Necessary purity is obtained in two stages. In the first stage, 15 g of potassium permanganate per 11 of alcohol is added. After an hour, fractional distillation of alcohol is carried out. The fraction with boiling temperature of 78-79 °C is collected. In the second stage, 50g of active carbon per 11 of alcohol is added. Subsequently, alcohol is heated until it boils in a vessel for 2 hours and afterwards fractional distillation takes place again for obtaining target fraction. Alcohol produced in such a way has to be almost odourless and contain no more than 0,01% of impurities.

When using tap water for production of alcohol, various filtrations must take place, thus it is advisable to use distilled water.

Our research showed that organoleptic and taste quality of strong drinks greatly depends on the amount of air dissolved in them. Solubility of air in water follows the Henry's law - at a constant temperature solubility of gas in a liquid is directly proportional to the pressure of said gas above the liquid (equal to the pressure in liquid). Expression of the law is as follows:
c = k_{H}p_{g},
where c - concentration of gas in liquid;
k_{H}-Henry's coefficient;
pg - partial gas pressure above the liquid.

The solubility of oxygen in water is greater than solubility of nitrogen in water. Air, dissolved in water has approximately 35,6 % of oxygen when compared to part of 21% in normal air. Amount of air dissolved in water can be calculated using Henry's law.

Henry's coefficients at ambient temperature of 25 °C (77 °F) are:
oxygen - O₂ : 756,7 atm/(mol/l);
nitrogen - N₂ : 1600 atm/(mol/l).
Molar mass:
oxygen - O₂ : 31,9988 g/mol;
nitrogen - N₂ : 28,0134 g/mol.
Relative composition in air (with respect to volume):
oxygen - O₂ : ∼ 0,21;
nitrogen - N₂ : ~ 0,79.

Volume of dissolved oxygen in water at the atmospheric pressure can be calculated by using the following expression:
cₒ = (1 atm) 0,21/(756,7 atm/(mol/l) (31,9988 g/mol) = 0,0089 g/l ∼ 0,0089 g/kg.

Volume of dissolved nitrogen in water at the atmospheric pressure can be calculated by using the following expression:
c_{N} = (1 atm) 0,79/(1600 atm/(mol/l) (28,0134 g/mol) = 0,0138 g/l ∼ 0,0138 g/kg.

Considering that air is composed of oxygen and nitrogen, then:
cₐ = (0,0089 g/l*)* + (0,0138 g/l) = 0,0227 g/l ∼ 0,023 g/kg or 29,18 cm³/l (2,918 % volumetric).

It was shown experimentally that depending on the concentration of alcohol, the amount of air in solutions of alcohol fluctuates from 4 to9,4 % (volumetric).

In production of alcoholic drinks, inner partitions of walnuts are used as vegetative raw material because they are excellent sorbents as well as excellent aroma, fiery, spicy and binding material in production of vodka. In addition, this material does not impart its colour to the ready-made drink.

Sugar is a constituent material in all sweet liqueurs-vodkas for adding sweet and formation of taste as well as is added in small amounts to bitters and some other vodkas for smoothening their taste. Furthermore, sugar helps to assimilate aroma materials added into product and, respectively, to compose and generalize their cluster.

In production of liqueurs, crèmes and colourless products, loaf-sugar or refined fine sugar is used. For other products it is possible to use unrefined fine sugar. Loaf-sugar and refined fine sugar need to have not less than 99,9% content of sucrose in dry weight. Humidity of refined fine sugar cannot exceed 0,10 %, and of pressed loaf-sugar- 0,20 %.

Unrefined fine sugar needs to have not less than 99,75 % of sucrose and humidity shall not exceed 0,14%.

### Principal scheme of manufacturing of vodka

Mixture of distilled water and ethyl alcohol of necessary volume (higher than ready of ready-made product) is prepared at special area of cleaning section. 1/10 part of the solution is taken for preparation of sugar syrup. Prepared syrup is added to the total mixture. Afterwards from 0,1 g to 40 g (according to recipe requirements) of inner partitions of walnuts are added to the solution. Using a vacuum pump, the vessel containing prepared product is vacuumed for several minutes at the pressure of 10 mmHg, temperature of 20 °C, simultaneously mixing the solution with a blade mixer at <0,3 rpm. Preparation of product is finished and total degasation is defined by end of bubbles release. It can be observed visually or by using a stethoscope. Afterwards product in a hermetic state is diverted to the bottling section.

When preparing the mixture of water and alcohol, it is very important to follow the order of mixing water with alcohol. Alcohol has to be poured into the water, simultaneously mixing mechanically and not vice versa. Clarity of mixture is checked. If necessary, the product is filtered through a sand filter.

Loaf-sugar at the ratio of 1-25 grams for 100 ml of solution of alcohol (with respect to requirements of recipe) is taken for preparation of sugar syrup. Sugar is melted by heating at 70 °C. After cooling down, syrup is filtered to remove colloidal particles.

When producing flavored strong drinks (tequila, liqueur, bitter and alike), after the last vacuuming, they are saturated with pure nitrogen by applying gasification. Further, the product is diverted to the bottling area.

The main difference of this technology compared to others is removal of air (oxygen) from the alcoholic drink. By doing that, unpleasant taste, which occurs when consuming a drink, is removed. Initially, strong alcohols have a great amount of dissolved air contained mainly in alcohol. Contact of such drinks with mucosa of mouth, digestive tract and alkaline and acidic medium of stomach, due to change of dielectric penetration and concentration of alcohol, causes appearance of multiple air bubbles filled with alcohol vapor. When rising, the aforementioned bubbles irritate taste receptors and other nerve endings. We suggest treating this phenomenon as the cavitation process.

The word "cavitation" originates from the Latin word *"cavus",* which means *"empty, hollow".* Cavitation is the formation of cavities, or simply bubbles (filled with vapour/gas) in liquids. Gas contained in liquid is diffused into the bubbles. Gases are always contained in liquids and in case of local decline of pressure in liquid after the formation of cavitation bubbles, cavitation bubbles expand, having gas further intensively penetrating into the bubbles. Moving with stream to the higher local pressure area or during the period of semi-compression, cavitation bubbles explode and create shockwaves. At the moment of change of local pressure in the liquid, the bubbles can contract or expand by a great extent, which increases the pressure and temperature inside the bubbles (pressure - to several hundred bars, temperature - to several hundred degrees of Celsius). Because oxygen comprises the greatest fraction of gas diffused in a liquid, at the time of cavitation the gas in the bubbles is chemically more aggressive than atmospheric air. That is why, when consuming strong alcoholic drinks, which are produced by other technologies then mentioned hereto, the unpleasant taste is induced due to hot bubbles filled with oxygen (concentration grater then 27 %), nitrogen and alcohol vapour, which may affect the taste receptors directly or when exploding and triggering micro shockwaves.

In order to preserve the range of aroma in composite drinks when consumed, it is planned to replace an gases in the production technology by nitrogen, similarly to sparkling wines saturation with carbon dioxide.

### Example Nr. 1

Vodka of 40% by volume is produced. Rectified ethyl alcohol is used in production (any vegetative origin). Additional purification has great importance. Desirable purity is obtained after two stages. In the first stage, 15 g of potassium permanganate per 1 litre of alcohol is added. After an hour, fractional distillation of alcohol is carried out. A fraction with boiling temperature of 78-79 °C is collected. In the second stage, 50 g of active carbon per 1 litre of alcohol is added. Subsequently, alcohol is heated until it boils in a vessel for 2 hours and afterwards fractional distillation takes place again for collecting target fraction. Alcohol obtained in such a way has to be almost odourless and contain no more than 0,01% of impurities.

It is important to take in account losses of alcohol during sorting, degasation and bottling, when calculating the necessary amount of alcohol for manufacturing of vodka. In this case, general losses of alcohol are about 1,2 %, which accounts for 0,9% when degasating and 0,3 % during the bottling. For manufacturing vodka of 40% by volume, rectified alcohol of not less than 95,5 % by volume is used. Input of waterless ethyl alcohol for production of 2000 litres of vodka of 40 % by volume, taking into account the aforementioned losses of alcohol, is about 846 litres. In the production process of vodka, losses of distilled water are also possible by evaporation of mixture of water and alcohol as well as mechanically losing the water during the bottling of ready-made vodka. Thus it is important to take into account the degree of compression of water and alcohol mixture, when calculating the input of water. To produce 100 litres of vodka of 40 % by volume when using alcohol of 95,5 % by volume, 145,65 litres of water is required. Thus, input of distilled water for production of 2000 litres of vodka of 40 % by volume, when using 846 litres of alcohol, would be about 1232 litres. 3kg of sugar are required for production of 2000 litres of vodka. A mixture of distilled water and ethyl alcohol (alcohol is poured into the water and at the same time the solution is being mixed) is prepared in a special section of purification area. Then 1/10 of solution is taken for preparation of sugar syrup. For 100 ml of alcohol solution, 1,5 grams of loaf-sugar is needed. Sugar is melted by heating at 70 °C. After cooling down, the syrup is filtered to remove colloidal particles. The prepared syrup is poured into the total mixture. Using a vacuum pump the vessel containing prepared product is vacuumed for several minutes at the pressure of 10 mmHg, mixing the solution with a blade mixer at <0,3 rpm. Vacuuming of the solution is observed visually or using a stethoscope. End of preparation of product is defined by end of bubbles release, which is followed by end of vacuuming. Afterwards, product in a hermetic state is diverted to the bottling section.

### Example Nr. 2

A liqueur of 35% by volume is produced. Rectified ethyl alcohol is used in production (any vegetative origin). Additional purification has great importance. Desirable purity is obtained after two stages. In the first stage 15 g of potassium permanganate per 11 of alcohol is added. After an hour, fractional distillation of alcohol is carried out. A fraction with boiling temperature of 78-79 °C is collected. In the second stage 50g of active carbon per 11 of alcohol is added. Subsequently, alcohol is heated until it boils in a vessel for 2 hours and afterwards fractional distillation takes place again for collecting target fraction. Alcohol obtained in such a way has to be almost odourless and contain no more then 0,01% of impurities.

It is important to take in account losses of alcohol during sorting, degasation and bottling when calculating the necessary amount of alcohol for manufacturing of vodka. In this case, general losses of alcohol are about 1,2 %, which accounts for 0,9% when degasating and 0,3 % during the bottling. For manufacturing of liqueur of 35% by volume a rectified alcohol of not less than 95,5 % by volume is used. Input of waterless ethyl alcohol for production of 2000 litres of liqueur of 35 % by volume, taking in account said losses of alcohol, is about 742 litres. In the production process of liqueur, losses of distilled water are also possible by evaporation of mixture of water and alcohol as well as mechanical loss of water during the bottling of ready-made vodka. Thus it is important to take in account the degree of compression of water and alcohol mixture, when calculating the input of water. To produce 100 litres of vodka of 35 % by volume when using alcohol of 95,5 % by volume, 181 litres of water is required. Thus, input of distilled water for production of 2000 litres of liqueur of 35 % by volume, when using 742 litres of alcohol, would be about 1341 litres. 50 kg of sugar are required for production of 2000 litres of vodka. A mixture of distilled water and ethyl alcohol (alcohol is poured into the water and at the same time the solution is being mixed) is prepared in a special section of purification area. Then 1/10 of solution is taken for preparation of sugar syrup. For 100 ml of alcohol's solution 25 grams of loaf-sugar is needed. Sugar is melted by heating at 70 °C. Afterwards flavouring materials is added. They constitute 1% (of ready-made product weight. After cooling down, the syrup is filtered to remove colloidal particles. The prepared syrup is poured into the total mixture. Using a vacuum pump, the vessel containing prepared product is vacuumed for several minutes at the pressure of 10 mmHg, mixing the solution with a blade mixer at <0,3 rpm. Vacuuming of the solution is observed visually or by using a stethoscope. End of preparation of product is defined by end of bubbles release, which is followed by injection of nitrogen into the product through a capillary located at the bottom of the vessel. Product is saturated with nitrogen at a rate of about 10 cm³/s for 90cm³/l. Afterwards, the product in a hermetic state is diverted to the bottling section.

## Claims

1. Method for production of strong alcoholic drink, when a solution of ethyl alcohol and water is prepared by mixing water with ethyl alcohol, sugar syrup is poured into the solution, vegetative additives are added, solution is filtered and drink is bottled is **characterised in that** this method comprises the following steps:
preparation of sugar syrup from 1/10 of solution of water and ethyl alcohol, taking 1-25 grams of sugar for 100 ml of solution, pouring the prepared syrup into the solution of ethyl alcohol and water;
vacuuming the sealed vessel with prepared solution, at the same time mixing the solution with a blade mixer at a frequency of <0,3 rpm, pressure of 10 mmHg and temperature of 20 °C;
end of preparation of product is defined by end of bubbles release;
diverting of product in a hermetic state to the bottling.

2. Method for production of strong alcoholic drink according to claim 1, when a strong flavoured alcoholic drink is produced **characterised in that** after vacuuming the solution is saturated with nitrogen.

## Patentansprüche

1. Das Herstellungsverfahren für ein starkes alkoholisches Getränk, bei dem eine Ethanol-Wasser-Lösung durch Mischen von Ethanol und Wasser hergestellt wird, Zuckersyrup hinzu geschüttet und pflanzliche Zusatzstoffe hinzugegeben werden, diese Lösung filtriert und das Getränk in Flaschen abgefüllt wird, ist **dadurch gekennzeichnet, dass** die Herstellungsweise folgende Schritte umfasst:
aus einem Zehntel der Ethanol-Wasser-Lösung wird Zuckersirup zubereitet, indem auf 100 ml der Lösung 1-25g Zucker gegeben werden, der erhaltene Sirup wird in die Ethanol-Wasser-Lösung gegeben;
das hermetisch verschlossene Gefäß mit der Lösung wird vakuumiert, indem die Lösung mit einem Mixer bei <0,3 U/min, einem Druck von mmHg und einer Temperatur 20 °C gemischt wird;
die Lösung ist dann fertig zubereitet, wenn sich keine Gasbläschen mehr absondern;
abschließend wird die Lösung aus dem hermetisch abgeschlossenen Gefäß in Flaschen abgefüllt.

2. Das Herstellungserfahren für ein starkes alkoholisches Getränk gemäß Punkt 1, bei dem ein aromatisiertes starkes alkoholisches Getränk hergestellt wird, ist **dadurch gekennzeichnet, dass** die Lösung nach der Vakuumierung mit Stickstoff angereichert wird.

## Revendications

1. Le procédé de production d'une boisson spiritueuse, quand une solution d'alcool éthylique et d'eau est préparée en mélangeant de l'eau avec de l'alcool éthylique, le sirop de sucre est versé dans cette solution et les additifs végétatifs y sont ajoutés, la solution est filtrée et la boisson est embouteillée, est **caractérisé en ce que** ce procédé comprend les étapes suivantes :
Le sirop de sucre est préparé à partir de 1/10 de solution d'alcool éthylique et d'eau, en prenant de 1 à 25 grammes de sucre pour 100 ml de solution, ensuite le sirop préparé est versé dans la solution d'alcool éthylique et d'eau ;
Le récipient étanche contenant la solution préparée est aspiré, en même temps la solution est mélangée avec un mélangeur à lame à une fréquence de <0,3 tours par minute, sous une pression de 10 mmHg et à une température de 20 ° C ;
la fin de la préparation de la solution est définie par la fin de la libération de bulles de gaz ;
la solution finie dans un état hermétique est dirigée vers la mise en bouteille.

2. Le procédé de production d'une boisson spiritueuse conformément au paragraphe 1, quand une boisson spiritueuse aromatisée est produite, est **caractérisé en ce qu'**après l'aspiration, la solution est saturée avec de l'azote.
